# EUROPÄISCHE PATENTSCHRIFT

(11) **EP 4 371 956 B1**
(45) Veröffentlichungstag und Bekanntmachung des Hinweises auf die Patenterteilung: **06.08.2025**
(21) Anmeldenummer: 22020557.9
(22) Anmeldetag: 15.11.2022
(51) Int. Cl.: C04B 7/36

(54) **VERFAHREN ZUM VERARBEITEN VON ORGANISCHE RÜCKSTÄNDE ENTHALTENDEM STAUB IN EINER ZEMENTHERSTELLUNGSANLAGE**
METHOD FOR PROCESSING DUST CONTAINING ORGANIC RESIDUES IN A CEMENT MANUFACTURING PLANT
PROCÉDÉ DE TRAITEMENT DE POUSSIÈRES CONTENANT DES RÉSIDUS ORGANIQUES DANS UNE INSTALLATION DE FABRICATION DE CIMENT

(43) Veröffentlichungstag der Anmeldung: 22.05.2024
(73) Patentinhaber: Holcim Technology Ltd, 6300 Zug (CH)
(72) Erfinder: Cabernard, Beat, 7204 Untervaz (CH)
(74) Vertreter: SONN Patentanwälte GmbH & Co KG

(56) Entgegenhaltungen:
- JP-A- 2021 147 294
- JP-A- 2022 129 625
- JP-A- H08 283 053

## Beschreibung

Die Erfindung betrifft ein Verfahren zum Verarbeiten von organische Rückstände enthaltendem Staub in einer Zementherstellungsanlage.

Um den Einsatz fossiler Brennstoffe bei der Zementherstellung zu verringern, werden vermehrt alternative Brennstoffe wie getrockneter Klärschlamm, industrielle Abfälle oder nicht wiederverwertbare Kunststoffe verwendet. Wenn in einem Zementwerk große Mengen alternativer Brennstoffe verwendet werden, können sich als indirekte Folge organische Rückstände und Schwermetalle in der Zementproduktion Anlage ansammeln. Auch die natürlichen und alternativen Rohstoffe für die Klinkerherstellung können zu organischen Rückständen und Schadstoffen beitragen.

Diese organischen Rückstände reichern sich in der Regel im Zementofenstaub an und führen dazu, dass der Zementofenstaub nach seiner Abtrennung vom Abgasstrom anders als üblich nicht ohne weiteres der Zementmühle zugegeben werden kann, weil die unverbrannten organischen Rückstände im Zement unerwünschte Verunreinigungen darstellen. Beispielsweise führen organische Rückstände im Zement zu dunklen Punkten in dem aus Beton hergestellten Endprodukt, was aus ästhetischen Gründen nachteilig ist. Weiters wirken sich organische Rückstände negativ auf die Kontrolle der Luftporenbildung in Betonzusammensetzungen und auf die Rheologie von Betonzusammensetzungen vor dem Abbinden aus.

Die Anreicherung von Schwermetallen im Ofenabgas führt zu einer Verunreinigung der Umwelt, wenn keine geeigneten Maßnahmen unternommen werden, um die Schwermetalle abzutrennen. Ein besonders problematisches Schwermetall ist zum Beispiel Quecksilber, das im Ofenabgas in gasförmigem Zustand vorliegt.

JP2022129625 beschreibt eine Chlor-Bypass-Anlage und ihr Betriebsverfahren, eine Zementklinker-Herstellungsvorrichtung und ein Zementklinker-Herstellungsverfahren.

Die vorliegende Erfindung zielt daher darauf ab, die Verwendung alternativer Brennstoffe und organisch belasteter Rohstoffe für die Herstellung von Zementklinker zu ermöglichen, ohne die oben beschriebenen Nachteile in Kauf nehmen zu müssen.

Zur Lösung dieser Aufgabe stellt die Erfindung ein Verfahren zum Verarbeiten von organische Rückstände enthaltendem Staub in einer Zementherstellungsanlage bereit, umfassend das Einbringen des Staubs in den Chlorbypass der Zementherstellungsanlage, das Kontaktieren des eingebrachten Staubs mit aus einem Drehrohrofen der Zementherstellungsanlage in den Chlorbypass eingetragenem, mit Ofenstaub beladenen Ofenabgas und das Verbrennen der organischen Rückstände in einer Reaktionszone des Chlorbypasses bei einer Temperatur von > 580°C, worauf der Staub stromabwärts der Reaktionszone gekühlt und vom Ofenabgas getrennt und aus dem Chlorbypass ausgetragen wird. Die Erfindung beruht somit auf der Idee, die im Chlorbypass vorhandene thermische Energie zu nutzen, um die organischen Rückstände des Staubs durch Verbrennung zu eliminieren. Unter dem Chlorbypass ist hierbei ein Teilgasabzug des Ofenabgases eines Drehrohrofens einer Zementherstellungsanlage im Bereich des Ofeneinlaufs zur Begrenzung von Chlor-, Alkali- und Schwefelkreisläufen zu verstehen. In zahlreichen Zementherstellungsanlagen ist ein derartiger Chlorbypass zwischen dem Drehrohrofen und dem Vorwärmer eingebaut, um einen Teilstrom des Ofengases einer separaten Behandlung zu unterziehen. Damit wird der Chlorgehalt im Bereich des Ofeneinlaufs reduziert, was eine geringere Anreicherung dieses Elements und weniger Anbackungen und Verstopfungen zur Folge hat.

Das beim Ofeneinlauf abgezweigte, in den Chlorbypass gelangende Ofenabgas hat eine Temperatur von ungefähr 1.000 bis 1.100°C und führt bei Kontakt mit dem in den Chlorbypass eingebrachten, mit den organischen Rückständen beladenen Staub zu einer Verbrennung der organischen Rückstände. Die Reaktionszone des Chlorbypasses, in welche der Staub eingebracht wird und in welcher die Verbrennung erfolgt, ist möglichst nahe dem Ofeneinlauf angeordnet, wobei die Temperatur in der Reaktionszone > 580°C, vorzugsweise > 650°C beträgt.

Der erfindungsgemäß zu verarbeitende, organische Rückstände enthaltende Staub ist hierbei nicht derjenige Ofenstaub, der gemeinsam mit dem Ofenabgas vom Drehrohrofen direkt in den Chlorbypass gelangt. Der erfindungsgemäß zu verarbeitende Staub ist vielmehr ein Staub, der von außen in den Chlorbypass eingebracht wird, und beispielsweise aus einem Staubsilo in den Chlorbypass eingebracht wird. Für das Einbringen des Staubs ist beispielsweise ein Zufuhrrohr vorgesehen, das quer, insbesondere senkrecht oder schräg, zur Rohrachse des Chlorbypasses in diesen mündet.

Vorzugsweise wird der mit den organischen Rückständen beladene Staub in einen an den Ofeneinlauf angeschlossenen Steigschaft des Chlorbypasses eingebracht, insbesondere eingedüst.

Um eine möglichst vollständige Verbrennung der organischen Rückstände zu gewährleisten, ist eine Mindestverweilzeit des Staubs in der heißen Reaktionszone des Chlorbypasses anzustreben. Eine bevorzugte Ausführungsform des erfindungsgemäßen Verfahrens sieht daher vor, dass der Staub über einen Zeitraum im Chlorbypass, insbesondere in der Reaktionszone, gehalten wird, der eine vollständige Verbrennung der organischen Rückstände bewirkt. Bevorzugt beträgt die Verweilzeit des Staubs in der eine Temperatur von > 580°C aufweisenden Reaktionszone mindestens 1 Sekunde, vorzugsweise mindestens 2 Sekunden.

Es ist aber nicht zwingend, dass die vollständige Verbrennung der organischen Rückstände in der Reaktionszone selbst erfolgt. Es auch möglich, dass sich der Verbrennungsprozess der organischen Rückstände nach einer Verweilzeit von > 1 Sek, bevorzugt > 2 Sek, bei einer Temperatur von > 580°C, bevorzugt > 650°C, stromabwärts der Reaktionszone fortsetzt.

Um eine ausreichende Verweilzeit des Staubs in der Reaktionszone zu gewährleisten, ist bevorzugt vorgesehen, dass in der Reaktionszone eine um eine Rohrachse des Chlorbypasses drehende Strömung erzeugt und/oder aufrechterhalten wird.

Bevorzugt wird ein Trägergas, vorzugsweise Luft, mit einem Drall in den Chlorbypass eingebracht, um die drehende Strömung zu erzeugen. Dies wird beispielsweise durch tangentiales Einblasen des Trägergases in den Chlorbypass erreicht. Das z.B. mit Umgebungstemperatur eingebrachte Trägergas bildet hierbei an der Rohrwand des Chlorbypasses eine kalte Schutzschicht für die Rohrwand aus, die den Staub umgibt und dem Staub eine Bewegungskomponente in Drehrichtung vermittelt. Das Trägergas verringert dadurch den Kontakt des Staubes mit der Rohrwand und kühlt die Rohrwand, wodurch ein Verkleben der Rohrwand durch Ablagerungen von Bestandteilen wie Schwefel und Chlor reduziert wird.

Nach dem Ausbrennen der organischen Verunreinigungen wird der Staub gekühlt und vom Ofenabgas getrennt und aus dem Chlorbypass ausgetragen. Das Kühlen des Staubs erfolgt hierbei bevorzugt durch Einblasen von Luft, beispielsweise in einer Quenchkammer, wie dies in herkömmlicher Weise bei einem Chlorbypass erfolgt.

Bevorzugt erfolgt die Kühlung zweistufig, wobei der Staub einer ersten Kühlung auf eine Temperatur von 580-680°C unterworfen wird, der teilgekühlte Staub einer Trennvorrichtung zugeführt wird, in der eine Grobfraktion des Staubs abgetrennt und ausgetragen und ggf. in den Drehrohrofen eingeführt wird, und dass der Staub einer zweiten Kühlung auf eine Temperatur von < 140°C unterworfen wird, bei der im Ofenabgas enthaltene Schwermetalle kondensieren und auf einer Feinfraktion des Staubs abgelagert werden. Die erste und/oder die zweite Kühlung erfolgt bevorzugt durch Einblasen von Luft, insbesondere Umgebungsluft.

Dadurch, dass der teilgekühlte Staub einer Trennvorrichtung, insbesondere einem Zyklonabscheider zugeführt wird, in der eine Grobfraktion des Staubs abgetrennt und ausgetragen und in den Drehrohrofen ein- bzw. rückgeführt wird, kann die von der Zementherstellungsanlage produzierte Staubmenge weiter reduziert werden.

Grundsätzlich können organische Rückstände enthaltende Stäube beliebiger Provenienz mit dem erfindungsgemäßen Verfahren behandelt werden. Insbesondere handelt es sich um Stäube die sowohl organische Rückstände als auch Schwermetalle, wie z.B. As, Pb, Cd, Cr, Co, Ni, Tl, Zn und Hg enthalten.

Besonders bevorzugt wird Staub behandelt, der aus der Zementherstellungsanlage selbst stammt, nämlich Zementofenstaub, der aus dem Ofenabgas abgetrennt wurde, nachdem das Ofenabgas einen Rohmehlvorwärmer durchlaufen hat und dann abgekühlt wurde.

Da das erfindungsgemäße Verfahren sicherstellt, dass der im Chlorbypass behandelte und aus diesem abgetrennte Staub keine organischen Verunreinigungen mehr enthält, kann dieser ohne weiteres einem Zementklinker zugegeben und mit diesem in einer Zementmühle gemahlen werden.

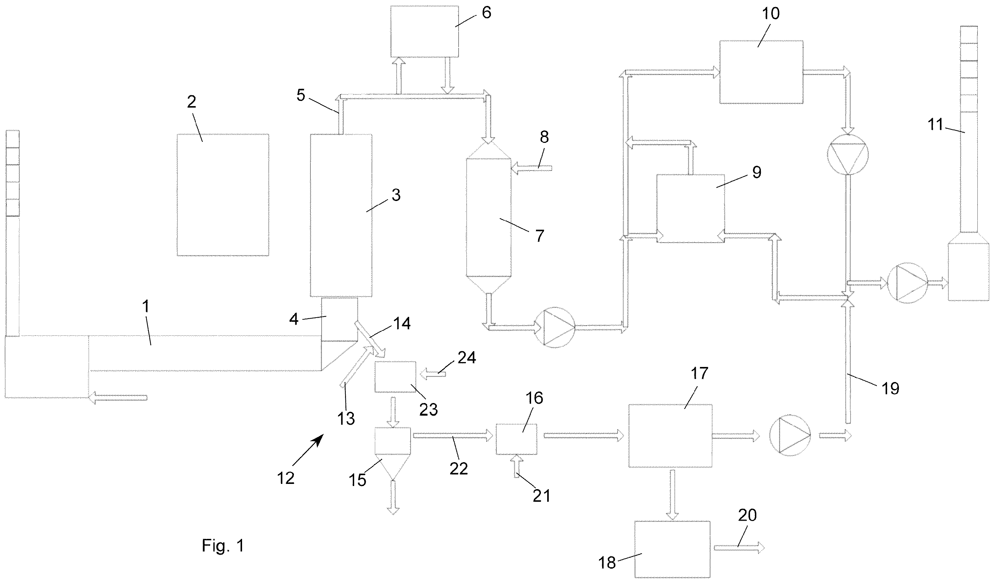

Die Erfindung wird nachfolgend anhand eines in der Zeichnung schematisch dargestellten Ausführungsbeispiels näher erläutert. In dieser zeigt Fig. 1 eine Layout einer Zementherstellungsanlage, welche für die Durchführung des erfindungsgemäßen Verfahrens ausgelegt ist.

Die Zementherstellungsanlage umfasst einen Drehrohrofen 1, in dem vorgewärmtes und ggf. vorkalziniertes Rohmehl zu Zementklinkergebrannt wird. Das Rohmehl wird in einem Silo 2 gelagert und einem Rohmehlvorwärmer 3 aufgegeben, in dem das Rohmehl im Gegenstrom zu dem aus Drehrohrofen 1 kommenden heißen Abgas durch mehrere hintereinander angeordnete Zyklon- oder Wirbelkammerstufen geleitet wird. Das vorgewärmte Rohmehl gelangt über den Ofeneinlauf 4 in den Drehrohrofen 1, während das Abgas über die Leitung 5 aus dem Rohmehlvorwärmer 3 ausgetragen wird. Die Wärme des Abgases kann in einem Abwärmerückgewinner 6 genutzt werden, worauf das Abgas in einem Konditionierturm 7 unter Zugabe von Wasser 8 gequencht wird. Die Restwärme des Abgases kann in einer Rohmehlmühle und/oder einem Rohmehlvorwärmer 9 zur Vorwärmung des Rohmehls genutzt werden. Die im Abgas enthaltenen Staubanteile, umfassend Zementofentaub und Rohmehlstaub, werden im Hauptfilter 10 abgetrennt, sodass das von Staub befreite Abgas über den Kamin 11 abgegeben werden kann.

Der im Hauptfilter 10 abgetrennte, organische Rückstände enthaltende Staub 13 wird nun erfindungsgemäß dem Chlorbypass 12 der Zementofenanlage aufgegeben. Der Chorbypass 12 ist an den Ofeneinlauf 4 angeschlossen und dient dazu, einen Teil des Ofenabgases zur Begrenzung von Chlor-, Alkali- und Schwefelkreisläufen aus dem Drehrohrofen 1 abzuziehen. In der Reaktionszone 14 des Chlorbypasses 12 werden die organischen Bestandteile des aufgegebenen Staubs 13 bei einer geeigneten Temperatur zumindest teilweise verbrannt. Ein weiteres Ausbrennen kann auch in einem weiter stromabwärts gelegenen Bereich 22 des Chlorbypasses erfolgen. Dazwischen ist eine Kühlkammer 23 und ein optionaler Trennzyklon 15 angeordnet, über welchen grobe Bestandteile des Staubs abgetrennt und dem Drehrohrofen 1 rückgeführt werden können. In weiterer Folge wird das Abgas in einer weiteren Quenchkammer 16 durch Zugabe von Luft 21 abgekühlt und der Staub in einem Filter 17 abgetrennt. Der Staub wird in einem Silo 18 gelagert, wobei das gereinigte Abgas über die Leitung 19 dem Kamin 11 zugeführt wird. Der Staub 20 kann in weitere Folge einer Zementmühle als Zusatzstoff zum Zement zugegeben werden.

## Patentansprüche

1. Verfahren zum Verarbeiten von organische Rückstände enthaltendem Staub in einer Zementherstellungsanlage, umfassend das Einbringen des Staubs in den Chlorbypass (12) der Zementherstellungsanlage, das Kontaktieren des eingebrachten Staubs mit aus einem Drehrohrofen (1) der Zementherstellungsanlage in den Chlorbypass (12) eingetragenem, mit Ofenstaub beladenen Ofenabgas und das Verbrennen der organischen Rückstände in einer Reaktionszone (14) des Chlorbypasses (12) bei einer Temperatur von > 580°C, worauf der Staub stromabwärts der Reaktionszone (14) gekühlt und vom Ofenabgas getrennt und aus dem Chlorbypass (12) ausgetragen wird.

2. Verfahren nach Anspruch 1, **dadurch gekennzeichnet, dass** der Staub über einen Zeitraum im Chlorbypass (12), insbesondere in der Reaktionszone (14), gehalten wird, der eine vollständige Verbrennung der organischen Rückstände bewirkt.

3. Verfahren nach Anspruch 1 oder 2, **dadurch gekennzeichnet, dass** in der Reaktionszone (14) eine um eine Rohrachse des Chlorbypasses (12) drehende Strömung erzeugt und/oder aufrechterhalten wird.

4. Verfahren nach Anspruch 3, **dadurch gekennzeichnet, dass** ein Trägergas, vorzugsweise Luft, mit einem Drall in den Chlorbypass (12) eingebracht wird, um die drehende Strömung zu erzeugen.

5. Verfahren nach einem der Ansprüche 1 bis 4, **dadurch gekennzeichnet, dass** das Kühlen des Staubs durch Einblasen von Luft (21,24) erfolgt.

6. Verfahren nach einem der Ansprüche 1 bis 5, **dadurch gekennzeichnet, dass** der Staub einer ersten Kühlung (23) auf eine Temperatur von 580-680°C unterworfen wird, der teilgekühlte Staub einer Trennvorrichtung (15) zugeführt wird, in der eine Grobfraktion des Staubs abgetrennt und ausgetragen und ggf. in den Drehrohrofen (1) eingeführt wird, und dass der Staub einer zweiten Kühlung (16) auf eine Temperatur von < 140°C unterworfen wird, bei der im Ofenabgas enthaltene Schwermetalle kondensieren und auf einer Feinfraktion des Staubs abgelagert werden.

7. Verfahren nach einem der Ansprüche 1 bis 6, **dadurch gekennzeichnet, dass** der Staub aus dem Ofenabgas, das einen Rohmehlvorwärmer (9) durchlaufen hat und dann abgekühlt wurde, abgetrennt wird und in den Chlorbypass (12) eingebracht wird.

8. Verfahren nach einem der Ansprüche 1 bis 7, **dadurch gekennzeichnet, dass** der aus dem Chlorbypass (12) ausgetragene Staub einem Zementklinker zugegeben und mit diesem in einer Zementmühle gemahlen wird.

## Claims

1. A method for processing dust containing organic residues in a cement manufacturing plant, comprising the introduction of the dust into the chlorine bypass (12) of the cement manufacturing plant, contacting the introduced dust with kiln exhaust gas loaded with kiln dust and introduced into the chlorine bypass (12) from a rotary kiln (1) of the cement manufacturing plant, and burning the organic residues in a reaction zone (14) of the chlorine bypass (12) at a temperature of > 580°C, whereupon the dust is cooled downstream of the reaction zone (14) and separated from the kiln exhaust gas and discharged from the chlorine bypass (12).

2. The method according to claim 1, **characterized in that** the dust is kept in the chlorine bypass (12), in particular in the reaction zone (14), for a period of time that causes complete combustion of the organic residues.

3. The method according to claim 1 or 2, **characterized in that** a flow rotating about a pipe axis of the chlorine bypass (12) is generated and/or maintained in the reaction zone (14).

4. The method according to claim 3, **characterized in that** a carrier gas, preferably air, is introduced into the chlorine bypass (12) with an angular momentum to generate the rotating flow.

5. The method according to any one of claims 1 to 4, **characterized in that** the cooling of the dust is carried out by blowing in air (21,24).

6. The method according to any one of claims 1 to 5, **characterized in that** the dust is subjected to a first cooling (23) to a temperature of 580-680°C, the partially cooled dust is fed to a separation device (15), in which a coarse fraction of the dust is separated and discharged and optionally introduced into the rotary kiln (1), and **in that** the dust is subjected to a second cooling (16) to a temperature of < 140°C, at which heavy metals contained in the kiln exhaust gas condense and are deposited on a fine fraction of the dust.

7. The method according to any one of claims 1 to 6, **characterized in that** the dust is separated from the kiln exhaust gas, which has passed through a raw meal preheater (9) and has then been cooled, and is introduced into the chlorine bypass (12).

8. The method according to any one of claims 1 to 7, **characterized in that** the dust discharged from the chlorine bypass (12) is added to a cement clinker and ground therewith in a cement mill.

## Revendications

1. Procédé de traitement de poussière contenant des résidus organiques dans une installation de fabrication de ciment, comprenant l'introduction de la poussière dans le by-pass de chlore (12) de l'installation de fabrication de ciment, la mise en contact de la poussière introduite avec des gaz d'échappement du four chargés de poussière de four introduits dans le by-pass de chlore (12) depuis un four rotatif (1) de l'installation de fabrication de ciment, et la combustion des résidus organiques dans une zone de réaction (14) du by-pass de chlore (12) à une température > 580°C, après quoi la poussière est refroidie en aval de la zone de réaction (14), séparée des gaz d'échappement du four et évacuée du by-pass de chlore (12).

2. Procédé selon la revendication 1, **caractérisé en ce que** la poussière est maintenue pendant une période dans le by-pass de chlore (12), en particulier dans la zone de réaction (14), qui permet une combustion complète des résidus organiques.

3. Procédé selon la revendication 1 ou 2, **caractérisé en ce qu'**un flux rotatif autour d'un axe tubulaire du by-pass de chlore (12) est généré et/ou maintenu dans la zone de réaction (14).

4. Procédé selon la revendication 3, **caractérisé en ce qu'**un gaz porteur, de préférence de l'air, est introduit avec une turbulence dans le by-pass de chlore (12) pour générer le flux rotatif.

5. Procédé selon l'une des revendications 1 à 4, **caractérisé en ce que** le refroidissement de la poussière est effectué par injection d'air (21, 24).

6. Procédé selon l'une des revendications 1 à 5, **caractérisé en ce que** la poussière est soumise à un premier refroidissement (23) à une température de 580-680°C, la poussière partiellement refroidie est amenée à un dispositif de séparation (15) dans lequel une fraction grossière de la poussière est séparée et évacuée et éventuellement introduite dans le four rotatif (1), et **en ce que** la poussière est soumise à un second refroidissement (16) à une température < 140°C, à laquelle les métaux lourds contenus dans les gaz d'échappement du four se condensent et se déposent sur une fraction fine de la poussière.

7. Procédé selon l'une des revendications 1 à 6, **caractérisé en ce que** la poussière est séparée des gaz d'échappement du four qui ont traversé un préchauffeur de farine crue (9) et ont ensuite été refroidis, et est introduite dans le by-pass de chlore (12).

8. Procédé selon l'une des revendications 1 à 7, **caractérisé en ce que** la poussière évacuée du by-pass de chlore (12) est ajoutée à un clinker de ciment et broyée avec celui-ci dans un broyeur à ciment.
